# EUROPEAN PATENT APPLICATION

(11) **EP 3 190 555 A1**
(43) Date of publication of application: **12.07.2017**
(21) Application number: 17150437.6
(22) Date of filing: 05.01.2017
(51) Int. Cl.: G06Q 10/10, H04L 12/58

(54) **METHOD FOR OPERATING A DISPLAY DEVICE AND DISPLAY**

(30) Priority: 08.01.2016 CN 201610013156
(71) Applicant: Beijing Xiaomi Mobile Software Co., Ltd., Beijing 100085 (CN)
(72) Inventor: Liu, Guoming, Beijing, Beijing 100085 (CN)
(74) Representative: dompatent von Kreisler Selting Werner - Partnerschaft von Patent- und Rechtsanwälten mbB

(57) **Abstract**

The present disclosure relates to a group message display method and device. The method includes that: a second group message which is a response to a first group message in a first message display area is received; a second message display area is created; and the first group message and the second group message are displayed in the second message display area. Therefore, the second group message associated with the first group message is displayed in another display area for a user to conveniently distinguish an association relationship of the group messages.

## Description

### TECHNICAL FIELD

The present disclosure generally relates to the technical field of operating computer devices and computer devices itself, and more particularly, to a method for operating a display device and a corresponding display device..

### BACKGROUND

At present, along with development of Internet techniques, smart terminals are rapidly developed. Smart terminals have become an indispensable part in people's daily lives. A user may adopt a smart terminal for daily activities such as shopping and communication, and multiple users may communicate with one another during communication through smart terminals.

### SUMMARY

Accordingly, the embodiment of the present disclosure provides a method for operating a display device and a corresponding display device, in accordance with claims which follow.

According to a first aspect of the embodiment of the present disclosure, there is provided a method for operating a display device, including:

Receiving a second group message which is a response to a first group message in a first message display area ;
creating a second message display area; and
displaying the first group message and the second group message are displayed in the second message display area.

The technical solution provided by the embodiment of the present disclosure may achieve the following beneficial effect: in a group conversation, the second group message which is a response to the first group message in the first message display area is received, and the second message display area is created for the second group message and the first group message to display the first group message and the second group message. In this way, the second group message associated with the first group message is displayed in another display area for a user to conveniently distinguish an association relationship of the group messages. Thus, the user can conveniently follow a conversation within one screen or part of the screen without cumbersome retrieval of earlier messages, which would need to be memorized. Hence, users are not limited in following an individual conversation by their memory of earlier messages or time consuming look-up of earlier messages belonging to the specific conversation. Therefore, the message provides a comprehensive arrangement of information, thereby considering physiological conditions of reception of information.

According to an exemplary embodiment, the second group message may include a message Identifier (ID) of the second group message and a message ID of a group message replied with the second group message;
receiving the second group message which is a response to the first group message in the first message display area may include that:
parsing, from the second group message, the message ID of the group message replied with the second group message;
comparing the message ID of the group message replied with the second group message with message IDs of group messages in the first message display area; and
when it is determined by comparison that the message ID of the group message replied with the second group message is the same as a message ID of the first group message, determining that the second group message is a group message which is a response to the first group message.

The technical solution provided by the embodiment of the present disclosure may achieve the following beneficial effect: the message ID of the group message replied with the second group message is compared with the message ID of the first group message to determine which previous message is replied with the group message replied with the second group message. In this way, accuracy of determining the group message replied with the second group message is improved, and the second group message associated with the first group message is further displayed in the other display area for the user to conveniently distinguish the association relationship of the group messages.

According to an exemplary embodiment, receiving the second group message which is a response to the first group message in the first message display area may include that:
when an operation of clicking on the first group message in the first message display area is received, popping up a message replying window;
receiving the second group message input by the user in the message replying window; and
receiving an operation of sending the second group message.

The technical solution provided by the embodiment of the present disclosure may achieve the following beneficial effect: when the operation of clicking on the first group message in the first message display area is received, a new window is created for the user to input the second group message. In this way, the user may conveniently reply the first group message, the second group message input by the user may be received in the popped-up message replying window, the accuracy of determining the group message replied with the second group message may also be improved, and the second group message associated with the first group message may further be displayed in the other display area for the user to conveniently distinguish the association relationship of the group messages.

According to an exemplary embodiment, the method may further include that:
when an operation of clicking on a group message in the second message display area is received, popping up a message replying window;
receiving a third group message input by the user in the message replying window; and
when an operation of sending the third group message in the message replying window is received, displaying the third group message in the second message display area, and is sent to clients of other members in a group through a server.

The technical solution provided by the embodiment of the present disclosure may achieve the following beneficial effect: when the operation of clicking on the group message in the second message display area is received, the message replying window for the second group message is popped up, the third group message input by the user is received in the message replying window, the third group message is displayed in the second message display area, and the third group message is sent to the clients of the other members in the group through the server. In this way, it is possible to display new messages in the second message display area during discussions about the existing second group message, so that the associated group messages are displayed in the same message display area for the user to conveniently distinguish the association relationship of the group messages.

According to an exemplary embodiment, the method may further include that:
receiving a fourth group message which is a response to a group message in the second message display area ; and
displaying the fourth group message in the second message display area.

The technical solution provided by the embodiment of the present disclosure may achieve the following beneficial effect: the received fourth group message which is a response to the group message in the second message display area is displayed in the second message display area. In this way, it is possible to display new messages in the second message display area during discussions about the existing second group message, so that the associated group messages are displayed in the same message display area for the user to conveniently distinguish the association relationship of the group messages.

According to an exemplary embodiment, creating the second message display area may include that:
creating a message display window as the second message display area, the message display window being a window different from the first message display area;
or
delimiting a display area within the first message display area as the second message display area.

The technical solution provided by the embodiment of the present disclosure may achieve the following beneficial effect: the created second message display area may be a window different from the first message display area, and may also be the display area delimited within the first message display area, and the created second message display area may be distinguished from the first message display area, so that the user may conveniently distinguish the association relationship of the group messages.

According to a second aspect of the embodiment of the present disclosure, there is provided a group message display device, including:
a first receiving module configured to receive a second group message which is a response to a first group message in a first message display area;
a creation module configured to create a second message display area; and
a first display module configured to display the first group message and the second group message in the second message display area.

The advantages and technical effects of the device according to the invention correspond to those of the method presented above.

According to a particular embodiment, the second group message may include a message ID of the second group message and a message ID of a group message replied with the second group message;
the first receiving module may include:
a parsing sub-module configured to parsed, from the second group message, the message ID of the group message replied with the second group message;
a comparison sub-module configured to compare the message ID of the group message replied with the second group message with message IDs of group messages in the first message display area; and
a determination sub-module configured to, when it is determined by comparison that the message ID of the group message replied with the second group message is the same as a message ID of the first group message, determine that the second group message is a group message which is a response to the first group message.

According to a particular embodiment, the first receiving module may include:
a popup sub-module configured to, when an operation of clicking on the first group message in the first message display area is received, pop up a message replying window;
a first receiving sub-module configured to receive the second group message input by a user in the message replying window; and
a second receiving sub-module configured to receive an operation of sending the second group message.

According to a particular embodiment, the device may further include:
a popup module configured to, when an operation of clicking on a group message in the second message display area is received, pop up a message replying window;
a second receiving module configured to receive a third group message input by the user in the message replying window; and
a processing module configured to, when an operation of sending the third group message in the message replying window is received, display the third group message in the second message display area, and sending the third group message to clients of other members in a group through a server.

According to a particular embodiment, the device may further include:
a third receiving module configured to receive a fourth group message which is a response to a group message in the second message display area; and
a second display module configured to display the fourth group message in the second message display area.

According to a particular embodiment, the creation module may include:
a creation sub-module configured to create a message display window as the second message display area, the message display window being a window different from the first message display area;
or
a delimiting sub-module configured to delimit a display area within the first message display area as the second message display area.

According to a third aspect of the embodiment of the present disclosure, there is provided a group message display device, including:
a processor; and
a memory configured to store instructions executable by the processor,
wherein the processor may be configured to:
receive a second group message which is a response to a first group message in a first message display area;
create a second message display area; and
display the first group message and the second group message in the second message display area.

In one particular embodiment, the steps of the group message display method are determined by computer program instructions.

Consequently, according to a fourth aspect, the disclosure is also directed to a computer program for executing the steps of a group message display method as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a flow chart showing a group message display method according to an exemplary embodiment.
Fig. 2 is a detailed flow chart showing a group message display method according to an exemplary embodiment.
Fig. 3 is a detailed flow chart showing a group message display method according to an exemplary embodiment.
Fig. 4 is a block diagram of a group message display device according to an exemplary embodiment.
Fig. 5 is a block diagram of a first receiving module in a group message display device according to an exemplary embodiment.
Fig. 6 is a block diagram of a first receiving module in a group message display device according to another exemplary embodiment.
Fig. 7 is a block diagram of a group message display device according to an exemplary embodiment.
Fig. 8 is a block diagram of a group message display device according to another exemplary embodiment.
Fig. 9 is a block diagram of a creation module in a group message display device according to an exemplary embodiment.
Fig. 10 is a group message display device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

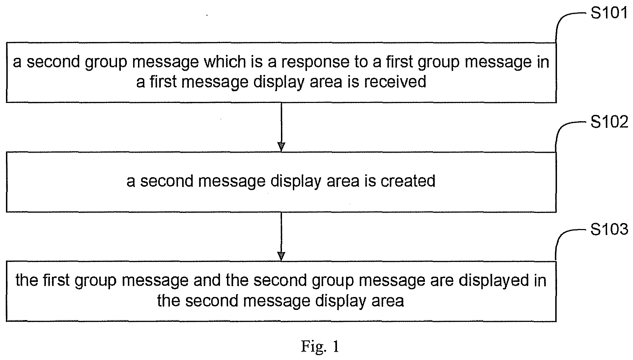

Fig. 1 is a flow chart showing a method for operating a display device according to an exemplary embodiment, and as shown in Fig. 1, the method is applied to a terminal, and includes the following Step S101 to Step S103:
Step S101: a second group message which is a response to a first group message in a first message display area is received;
Step S102: a second message display area is created; and
Step S103: the first group message and the second group message are displayed in the second message display area.

According to the method provided by the embodiment of the present disclosure, in a group conversation, the second group message which is a response to the first group message in the first message display area is received, and the second message display area is created for the second group message and the first group message to display the first group message and the second group message, so that the second group message associated with the first group message is displayed in another display area for a user to conveniently distinguish an association relationship of the group messages.

Optionally, the second group message includes a message ID of the second group message and a message ID of a group message replied with the second group message;
Step S101 may also be implemented by: Step A1 to Step A3:
Step A1: the message ID of the group message replied with the second group message is parsed from the second group message;
Step A2: the message ID of the group message replied with the second group message is compared with message IDs of group messages in the first message display area; and
Step A3: when it is determined by comparison that the message ID of the group message replied with the second group message is the same as a message ID of the first group message, it is determined that the second group message is a group message which is a response to the first group message.

By adopting the method, the message ID of the group message replied with the second group message is compared with the message ID of the first group message to determine which previous message replied with the group message replied with the second group message, so that accuracy of determining the group message replied with the second group message is improved, and the second group message associated with the first group message is further displayed in the other display area for the user to conveniently distinguish the association relationship of the group messages.

Optionally, Step S101 may also be implemented by: Step B1 to Step B3:
Step B1: when an operation of clicking on the first group message in the first message display area is received, a message replying window is popped up;
Step B2: the second group message input by the user is received in the message replying window; and
Step B3: an operation of sending the second group message is received.

By adopting the method, when the operation of clicking on the first group message in the first message display area is received, a new window is created for the user to input the second group message, so that the user may conveniently reply the first group message, the second group message input by the user may be received in the popped-up message replying window, the accuracy of determining the group message replied with the second group message may also be improved, and the second group message associated with the first group message may further be displayed in the other display area for the user to conveniently distinguish the association relationship of the group messages.

Optionally, the method may further be implemented by: Step C1 to Step C3:
Step C1: when an operation of clicking on a group message in the second message display area is received, a message replying window is popped up;
Step C2: a third group message input by the user is received in the message replying window; and
Step C3: when an operation of sending the third group message in the message replying window is received, the third group message is displayed in the second message display area, and is sent to clients of other members in a group through a server.

By adopting the method, when the operation of clicking on the group message in the second message display area is received, the message replying window for the second group message is popped up, the third group message input by the user is received in the message replying window, the third group message is displayed in the second message display area, and the third group message is sent to the clients of the other members in the group through the server, so that displaying of new messages in the second message display area in discussions about the existing second group message is implemented, and the associated group messages are displayed in the same message display area for the user to conveniently distinguish the association relationship of the group messages.

Optionally, the method may further be implemented by: Step D1 to Step D2:
Step D1: a fourth group message which is a response to a group message in the second message display area is received; and
Step D2: the fourth group message is displayed in the second message display area.

By adopting the method, the received fourth group message which is a response to the group message in the second message display area is displayed in the second message display area, so that displaying of new messages in the second message display area in discussions about the existing second group message is implemented, and the associated group messages are displayed in the same message display area for the user to conveniently distinguish the association relationship of the group messages.

Optionally, Step S102 may further be implemented in: Manner 1 and Manner 2:

Manner 1: a message display window is created as the second message display area, the message display window being a window different from the first message display area; and

Manner 2: a display area is delimited within the first message display area as the second message display area.

By adopting the method, the created second message display area may be a window different from the first message display area, and may also be the display area delimited within the first message display area, and the created second message display area may be distinguished from the first message display area, so that the user may conveniently distinguish the association relationship of the group messages.

How to implement a group message display method provided by the embodiment of the present disclosure will be introduced below with specific embodiments.

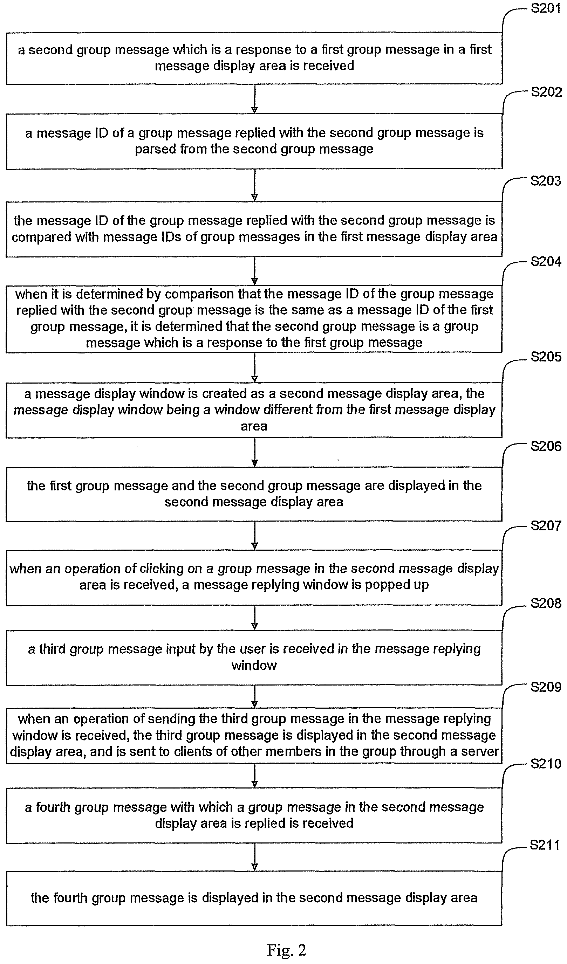

As shown in Fig. 2, the embodiment of the present disclosure provides a group message display method, which specifically includes the following implementation steps.

Step S201: a second group message which is a response to a first group message in a first message display area is received.

When a user chats in a group with a mobile phone, there are multiple topics at the same time, the user selects topic 1 for continuous discussion, and the user clicks a message about topic 1 in a group message display area, and replies the message to form the second group message.

Step S202: a message ID of a group message replied with the second group message is parsed from the second group message.

Since the user clicks the message about topic 1, the ID of the group message replied with the second group message may be parsed from the second group message.

Step S203: the message ID of the group message replied with the second group message is compared with message IDs of group messages in the first message display area.

The parsed message ID of the group message replied with the second group message is compared with the message IDs of the group messages in the first message display area. That is, the parsed message ID is compared with message IDs of all messages in the group.

Step S204: when it is determined by comparison that the message ID of the group message replied with the second group message is the same as a message ID of the first group message, it is determined that the second group message is a group message which is a response to the first group message.

When the parsed message ID is the same as a message ID in the group, it is determined that the second group message is a group message which is a response to the first group message corresponding to the message ID.

Step S205: a message display window is created as a second message display area, the message display window being a window different from the first message display area.

The message display window is created outside the first message display area as the second message display area.

Step S206: the first group message and the second group message are displayed in the second message display area.

Step S207: when an operation of clicking on a group message in the second message display area is received, a message replying window is popped up.

Step S208: a third group message input by the user is received in the message replying window.

Step S209: when an operation of sending the third group message in the message replying window is received, the third group message is displayed in the second message display area, and is sent to clients of other members in the group through a server.

Step S210: a fourth group message which is a response to a group message in the second message display area is received.

Step S211: the fourth group message is displayed in the second message display area.

According to the method for operating a display device provided by the embodiment of the present disclosure, in a group conversation, the second group message which is a response to the first group message in the first message display area is received, the second message display area is created for the second group message and the first group message to display the first group message and the second group message, and the group messages which are responses to the messages in the second message display area are continuously displayed in the second message display area, so that the group messages in an association relationship are all displayed in the second message display area for the user to conveniently distinguish the association relationship of the group messages.

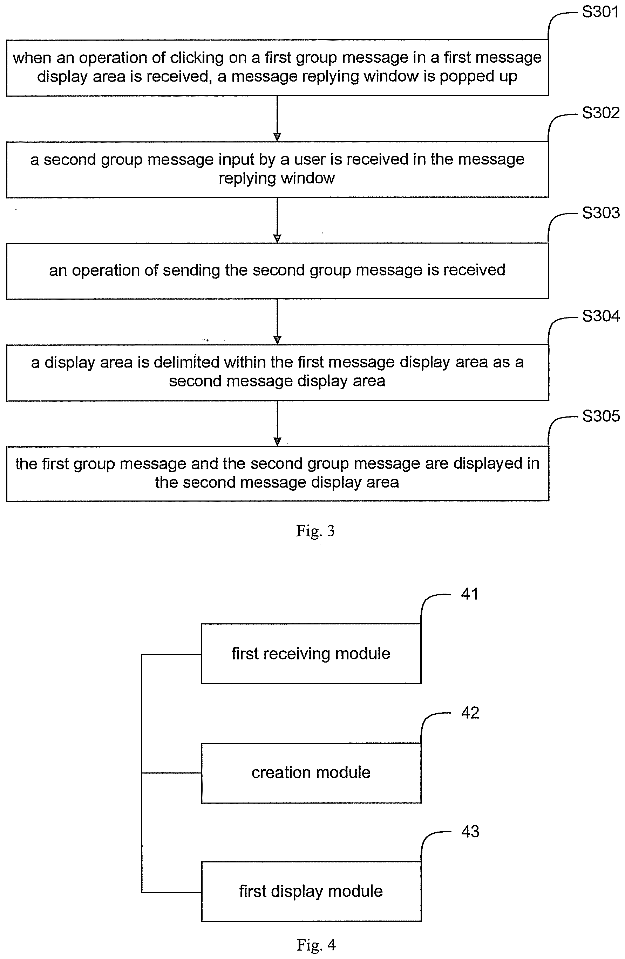

As shown in Fig. 3, the embodiment of the present disclosure provides a group message display method, which specifically includes the following implementation steps:
Step S301: when an operation of clicking on a first group message in a first message display area is received, a message replying window is popped up;
Step S302: a second group message input by a user is received in the message replying window;
Step S303: an operation of sending the second group message is received;
Step S304: a display area is delimited within the first message display area as a second message display area; and
Step S305: the first group message and the second group message are displayed in the second message display area.

According to the method for operating a display device provided by the embodiment of the present disclosure, in a group conversation, the second group message which is a response to the first group message in the first message display area is received, the second message display area is created for the second group message and the first group message to display the first group message and the second group message, and when the operation of clicking on the first group message in the first message display area is received, a new window is created for the user to input the second group message, so that the user may conveniently reply the first group message, the second group message input by the user may be received in the popped-up message replying window, accuracy of determining the group message replied with the second group message may also be improved, and the second group message associated with the first group message may further be displayed in another display area for the user to conveniently distinguish an association relationship of the group messages.

A device embodiment of the present disclosure is described below, and may be configured to execute the method embodiment of the present disclosure.

Fig. 4 is a block diagram of a group message display device according to an exemplary embodiment, and the device may be implemented into part or all of electronic equipment by virtue of software, hardware or a combination of the two. As shown in Fig. 4, the group message display device includes:
a first receiving module 41 configured to receive a second group message which is a response to a first group message in a first message display area;
a creation module 42 configured to create a second message display area; and
a first display module 43 configured to display the first group message and the second group message in the second message display area.

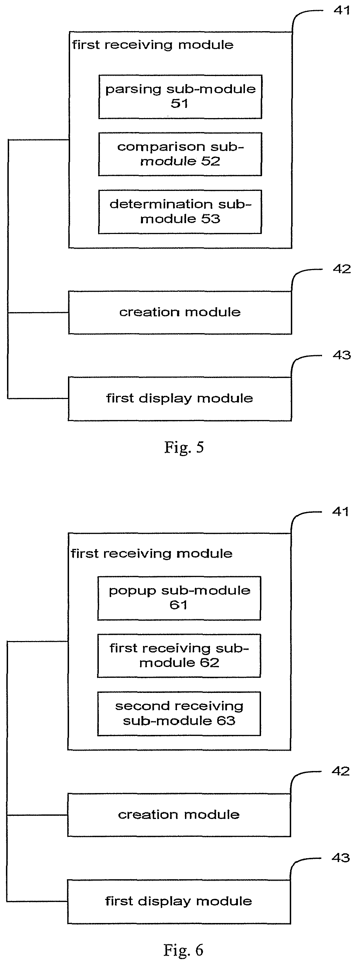

As shown in Fig. 5, the second group message includes a message ID of the second group message and a message ID of a group message replied with the second group message;
the first receiving module 41 includes:
a parsing sub-module 51 configured to parse the message ID of the group message replied with the second group message from the second group message;
a comparison sub-module 52 configured to compare the message ID of the group message replied with the second group message with message IDs of group messages in the first message display area; and
a determination sub-module 53 configured to, when it is determined by comparison that the message ID of the group message replied with the second group message is the same as a message ID of the first group message, determine that the second group message is a group message which is a response to the first group message.

As shown in Fig. 6, the first receiving module 41 includes:
a popup sub-module 61 configured to, when an operation of clicking on the first group message in the first message display area is received, pop up a message replying window;
a first receiving sub-module 62 configured to receive the second group message input by a user in the message replying window; and
a second receiving sub-module 63 configured to receive an operation of sending the second group message.

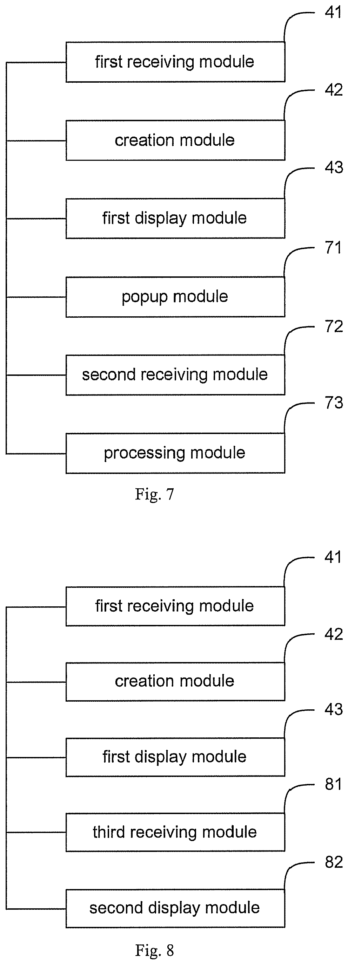

As shown in Fig. 7, based on the structure shown in Fig. 4, the device further includes:
a popup module 71 configured to, when an operation of clicking on a group message in the second message display area is received, pop up a message replying window;
a second receiving module 72 configured to receive a third group message input by the user in the message replying window; and
a processing module 73 configured to, when an operation of sending the third group message in the message replying window is received, display the third group message in the second message display area, and sending it to clients of other members in a group through a server.

As shown in Fig. 8, based on the structure shown in Fig. 4, the device further includes:
a third receiving module 81 configured to receive a fourth group message which is a response to a group message in the second message display area; and
a second display module 82 configured to display the fourth group message in the second message display area.

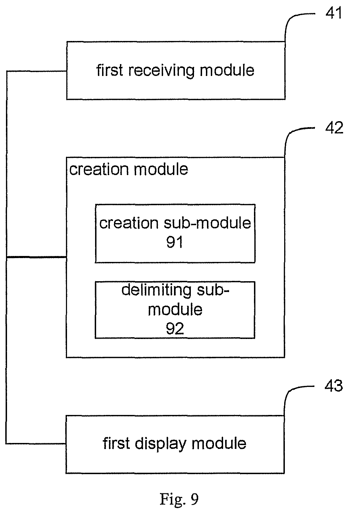

As shown in Fig. 9, the creation module 42 includes:
a creation sub-module 91 configured to create a message display window as the second message display area, the message display window being a window different from the first message display area; or
a delimiting sub-module 92 configured to delimit a display area within the first message display area as the second message display area.

A group message display device includes:
a processor; and
a memory configured to store instructions executable by the processor,
wherein the processor is configured to:
receive a second group message which is a response to a first group message in a first message display area;
create a second message display area; and
display the first group message and the second group message in the second message display area.

The processor may further be configured as follows:
the second group message includes a message ID of the second group message and a message ID of a group message replied with the second group message, and
the operation that the second group message which is a response to the first group message in the first message display area is received includes that:
the message ID of the group message replied with the second group message is parsed from the second group message;
the message ID of the group message replied with the second group message is compared with message IDs of group messages in the first message display area; and
when it is determined by comparison that the message ID of the group message replied with the second group message is the same as a message ID of the first group message, it is determined that the second group message is a group message which is a response to the first group message.

The processor may further be configured as follows:
the operation that the second group message which is a response to the first group message in the first message display area is received includes that:
when an operation of clicking on the first group message in the first message display area is received, a message replying window is popped up;
the second group message input by a user is received in the message replying window; and
an operation of sending the second group message is received.

The processor may further be configured as follows:
the method further includes that:
when an operation of clicking on a group message in the second message display area is received, a message replying window is popped up;
a third group message input by the user is received in the message replying window; and
when an operation of sending the third group message in the message replying window is received, the third group message is displayed in the second message display area, and is sent to clients of other members in a group through a server.

The processor may further be configured as follows:
the method further includes that:
a fourth group message which is a response to a group message in the second message display area is received; and
the fourth group message is displayed in the second message display area.

The processor may further be configured as follows:
the operation that the second message display area is created includes that:
a message display window is created as the second message display area, the message display window being a window different from the first message display area;
or
a display area is delimited within the first message display area as the second message display area.

With respect to the devices in the above embodiments, the specific manners for performing operations for individual modules therein have been described in detail in the embodiments regarding the methods, which will not be elaborated herein.

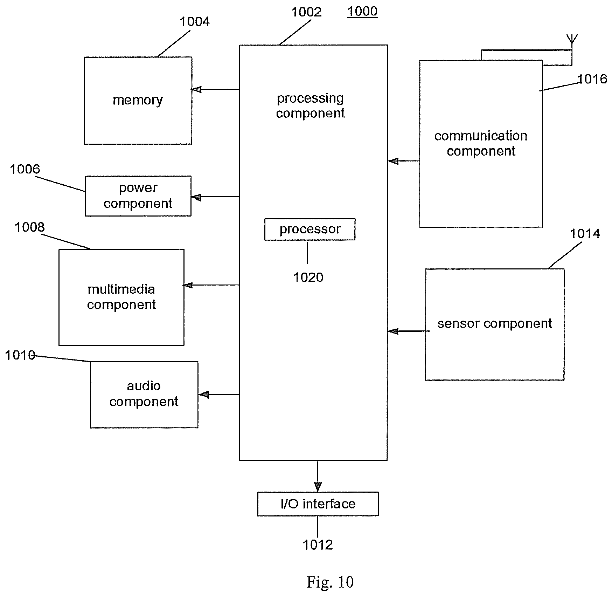

Fig. 10 is a block diagram of a video recording control device according to an exemplary embodiment. For example, the device 1000 may be a video camera, sound recording equipment, a mobile phone, a computer,
a digital broadcast terminal, a messaging device, a gaming console, a tablet, a medical device, exercise equipment, a Personal Digital Assistant (PDA) and the like.

The device 1000 may include one or more of the following components: a processing component 1002, a memory 1004, a power component 1006, a multimedia component 1008, an audio component 1010, an Input/Output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or part of the steps in the abovementioned method. Moreover, the processing component 1002 may include one or more modules which facilitate interaction between the processing component 1002 and the other components. For instance, the processing component 1002 may include a multimedia module to facilitate interaction between the multimedia component 1008 and the processing component 1002.

The memory 1004 is configured to store various types of data to support the operation of the device 1000. Examples of such data include instructions for any application programs or methods operated on the device 1000, contact data, phonebook data, messages, pictures, video, etc. The memory 1004 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1006 provides power for various components of the device 1000. The power component 1006 may include a power management system, one or more power supplies, and other components associated with the generation, management and distribution of power for the device 1000.

The multimedia component 1008 includes a screen providing an output interface between the device 1000 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 1008 includes a front camera and/or a rear camera. The front camera and/or the rear camera may receive external multimedia data when the device 1000 is in an operation mode, such as a photographing mode or a video mode. Each of the front camera and the rear camera may be a fixed optical lens system or have focusing and optical zooming capabilities.

The audio component 1010 is configured to output and/or input an audio signal. For example, the audio component 1010 includes a Microphone (MIC), and the MIC is configured to receive an external audio signal when the device 1000 is in the operation mode, such as a call mode, a recording mode and a voice recognition mode. The received audio signal may be further stored in the memory 1004 or sent through the communication component 1016. In some embodiments, the audio component 1010 further includes a speaker configured to output the audio signal.

The I/O interface 1012 provides an interface between the processing component 1002 and a peripheral interface module, and the peripheral interface module may be a keyboard, a click wheel, a button and the like. The button may include, but not limited to: a home button, a volume button, a starting button and a locking button.

The sensor component 1014 includes one or more sensors configured to provide status assessment in various aspects for the device 1000. For instance, the sensor component 1014 may detect an on/off status of the device 1000 and relative positioning of components, such as a display and small keyboard of the device 1000, and the sensor component 1014 may further detect a change in a position of the device 1000 or a component of the device 1000, presence or absence of contact between the user and the device 1000, orientation or acceleration/deceleration of the device 1000 and a change in temperature of the device 1000. The sensor component 1014 may include a proximity sensor configured to detect presence of an object nearby without any physical contact. The sensor component 1014 may also include a light sensor, such as a Complementary Metal Oxide Semiconductor (CMOS) or Charge Coupled Device (CCD) image sensor, configured for use in an imaging application. In some embodiments, the sensor component 1014 may also include an acceleration sensor, a gyroscope sensor, a magnetic sensor, a pressure sensor or a temperature sensor.

The communication component 1016 is configured to facilitate wired or wireless communication between the device 1000 and another device. The device 1000 may access a communication-standard-based wireless network, such as a Wireless Fidelity (WiFi) network, a 2nd-Generation (2G) or 3rd-Generation (3G) network or a combination thereof. In an exemplary embodiment, the communication component 1016 receives a broadcast signal or broadcast associated information from an external broadcast management system through a broadcast channel. In an exemplary embodiment, the communication component 1016 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 1000 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 1004 including an instruction, and the instruction may be executed by the processor 1020 of the device 1000 to implement the abovementioned unlocking method. For example, the non-transitory computer-readable storage medium may be a ROM, a Compact Disc Read-Only Memory (CD-ROM), a magnetic tape, a floppy disc, an optical data storage device and the like.

According to a non-transitory computer-readable storage medium having stored thereon instructions, when executed by a processor of the device 1000, cause the device 1000 to execute the abovementioned group message display method, which includes that:
a second group message which is a response to a first group message in a first message display area is received;
a second message display area is created; and
the first group message and the second group message are displayed in the second message display area.

The storage medium may further be configured as follows:
the second group message includes a message ID of the second group message and a message ID of a group message replied with the second group message, and
the operation that the second group message which is a response to the first group message in the first message display area is received includes that:
the message ID of the group message replied with the second group message is parsed from the second group message;
the message ID of the group message replied with the second group message is compared with message IDs of group messages in the first message display area; and
when it is determined by comparison that the message ID of the group message replied with the second group message is the same as a message ID of the first group message, it is determined that the second group message is a group message which is a response to the first group message.

The storage medium may further be configured as follows:
the operation that the second group message which is a response to the first group message in the first message display area is received includes that:
when an operation of clicking on the first group message in the first message display area is received, a message replying window is popped up;
the second group message input by a user is received in the message replying window; and
an operation of sending the second group message is received.

The storage medium may further be configured as follows:
the method further includes that:
when an operation of clicking on a group message in the second message display area is received, a message replying window is popped up;
a third group message input by the user is received in the message replying window; and
when an operation of sending the third group message in the message replying window is received, the third group message is displayed in the second message display area, and is sent to clients of other members in a group through a server.

The storage medium may further be configured as follows:
the method further includes that:
a fourth group message which is a response to a group message in the second message display area; and
the fourth group message is displayed in the second message display area.

The storage medium may further be configured as follows:
the operation that the second message display area is created includes that:
a message display window is created as the second message display area, the message display window being a window different from the first message display area;
or
a display area is delimited within the first message display area as the second message display area.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

### INDUSTRIAL APPLICABILITY

The technical solution provided by the embodiment of the present disclosure may achieve the following beneficial effect: in a group conversation, the second group message which is a response to the first group message in the first message display area is received, and the second message display area is created for the second group message and the first group message to display the first group message and the second group message. In this way, the second group message associated with the first group message is displayed in another display area for a user to conveniently distinguish an association relationship of the group messages.

The technical solution provided by the embodiment of the present disclosure may achieve the following beneficial effect: the message ID of the group message replied with the second group message is compared with the message ID of the first group message to determine which previous message is replied with the group message replied with the second group message. In this way, accuracy of determining the group message replied with the second group message is improved, and the second group message associated with the first group message is further displayed in the other display area for the user to conveniently distinguish the association relationship of the group messages.

The technical solution provided by the embodiment of the present disclosure may achieve the following beneficial effect: when the operation of clicking on the first group message in the first message display area is received, a new window is created for the user to input the second group message. In this way, the user may conveniently reply the first group message, the second group message input by the user may be received in the popped-up message replying window, the accuracy of determining the group message replied with the second group message may also be improved, and the second group message associated with the first group message may further be displayed in the other display area for the user to conveniently distinguish the association relationship of the group messages.

The technical solution provided by the embodiment of the present disclosure may achieve the following beneficial effect: when the operation of clicking on the group message in the second message display area is received, the message replying window for the second group message is popped up, the third group message input by the user is received in the message replying window, the third group message is displayed in the second message display area, and the third group message is sent to the clients of the other members in the group through the server. In this way, it is possible to display new messages in the second message display area during discussions about the existing second group message, so that the associated group messages are displayed in the same message display area for the user to conveniently distinguish the association relationship of the group messages.

The technical solution provided by the embodiment of the present disclosure may achieve the following beneficial effect: the received fourth group message which is a response to the group message in the second message display area is displayed in the second message display area. In this way, it is possible to display new messages in the second message display area during discussions about the existing second group message, so that the associated group messages are displayed in the same message display area for the user to conveniently distinguish the association relationship of the group messages.

The technical solution provided by the embodiment of the present disclosure may achieve the following beneficial effect: the created second message display area may be a window different from the first message display area, and may also be the display area delimited within the first message display area, and the created second message display area may be distinguished from the first message display area, so that the user may conveniently distinguish the association relationship of the group messages.

## Claims

1. A method for operating a display device, comprising:
receiving (S101) a second group message which is a response to a first group message in a first message display area;
creating (S102) a second message display area; and
displaying (S103) the first group message and the second group message in the second message display area.

2. The method according to claim 1, wherein the second group message comprises a message Identifier (ID) of the second group message and a message ID of a group message replied with the second group message,
receiving (S101) the second group message which is a response to the first group message in the first message display area comprises:
parsing (A1), from the second group message, the message ID of the group message replied with the second group message;
comparing (A2) the message ID of the group message replied with the second group message with message IDs of group messages in the first message display area; and
when it is determined by comparison that the message ID of the group message replied with the second group message is the same as a message ID of the first group message,
determining (A3) that the second group message is a group message which is a response to the first group message.

3. The method according to claim 1, wherein receiving (S101) the second group message which is a response to the first group message in the first message display area comprises:
when an operation of clicking on the first group message in the first message display area is received, popping up (B1) a message replying window;
receiving (B2) the second group message input by a user in the message replying window; and
receiving (B3) an operation of sending the second group message.

4. The method according to claim 1, further comprising:
when an operation of clicking on a group message in the second message display area is received, popping up (C1) a message replying window;
receiving (C2) a third group message input by the user in the message replying window; and
when an operation of sending the third group message in the message replying window is received, displaying (C3) the third group message in the second message display area, and sending the third group message to clients of other members in a group through a server.

5. The method according to claim 1, further comprising:
receiving (D1) a fourth group message which is a response to a group message in the second message display area; and
displaying (D2) the fourth group message in the second message display area.

6. The method according to any one of claims 1 to 5, wherein creating the second message display area comprises:
creating a message display window as the second message display area, the message display window being a window different from the first message display area;
or
delimiting a display area within the first message display area as the second message display area.

7. A group message display device, comprising:
a first receiving module (41) configured to receive a second group message which is a response to a first group message in a first message display area;
a creation module (42) configured to create a second message display area; and
a first display module (43) configured to display the first group message and the second group message in the second message display area.

8. The device according to claim 7, wherein the second group message comprises a message Identifier (ID) of the second group message and a message ID of a group message replied with the second group message;
the first receiving module (41) comprises:
a parsing sub-module (51) configured to parse, from the second group message, the message ID of the group message replied with the second group message;
a comparison sub-module (52) configured to compare the message ID of the group message replied with the second group message with message IDs of group messages in the first message display area; and
a determination sub-module (53) configured to, when it is determined by comparison that the message ID of the group message replied with the second group message is the same as a message ID of the first group message, determine that the second group message is a group message which is a response to the first group message.

9. The device according to claim 7, wherein the first receiving module (41) comprises:
a popup sub-module (61) configured to, when an operation of clicking on the first group message in the first message display area is received, pop up a message replying window;
a first receiving sub-module (62) configured to receive the second group message input by a user in the message replying window; and
a second receiving sub-module (63) configured to receive an operation of sending the second group message.

10. The device according to claim 7, further comprising:
a popup module (71) configured to, when an operation of clicking on a group message in the second message display area is received, pop up a message replying window;
a second receiving module (72) configured to receive a third group message input by the user in the message replying window; and
a processing module (73) configured to, when an operation of sending the third group message in the message replying window is received, display the third group message in the second message display area, and sending the third group message to clients of other members in a group through a server.

11. The device according to claim 7, further comprising:
a third receiving module (81) configured to receive a fourth group message which is a response to a group message in the second message display area; and
a second display module (82) configured to display the fourth group message in the second message display area.

12. The device according to any one of claims 7 to 11, wherein the creation module (42) comprises:
a creation sub-module (91) configured to create a message display window as the second message display area, the message display window being a window different from the first message display area;
or
a delimiting sub-module (92) configured to delimit a display area within the first message display area as the second message display area.

13. A group message display device, comprising:
a processor; and
a memory configured to store instructions executable by the processor,
wherein the processor is configured to:
receive a second group message which is a response to a first group message in a first message display area;
create a second message display area; and
display the first group message and the second group message in the second message display area.

14. A recording medium readable by a computer and having recorded thereon a computer program including instructions for executing the steps of a group message display method according to any one of claims 1 to 6.
